# EUROPÄISCHE PATENTSCHRIFT

(11) **EP 0 774 202 B1**
(45) Veröffentlichungstag und Bekanntmachung des Hinweises auf die Patenterteilung: **05.07.2000**
(21) Anmeldenummer: 96117975.1
(22) Anmeldetag: 08.11.1996
(51) Int. Cl.: A01D 34/66, A01D 75/18, A01B 61/00

(54) **Werkzeugträger**
Tool carrier
Dispositif porte-outil

(30) Priorität: 17.11.1995 US 560069
(43) Veröffentlichungstag der Anmeldung: 21.05.1997
(73) Patentinhaber: DEERE & COMPANY, Moline, Illinois 61265-8098 (US)
(72) Erfinder: Walters, James C., Ottumwa, Iowa 52501 (US)
(74) Vertreter: Feldmann, Bernhard

(56) Entgegenhaltungen:
- US-A- 2 625 784
- US-A- 3 430 461
- US-A- 4 497 161
- US-A- 4 999 981
- US-A- 5 029 626

## Beschreibung

Die Erfindung betrifft einen Werkzeugträger, insbesondere ein Mähbalken mit wenigstens einer Welle, einem Werkzeug, einer das Werkzeug tragenden Nabe und einem Scherglied.

Werkzeugträger, z. B. in der Landwirtschaft verwendete sich längs erstreckende Getriebegehäuse für Mähbalken, Kreiseleggen und dergleichen, weisen herkömmlich ein Stirn- oder Kegelradgetriebe für alle anzutreibenden Werkzeuge auf, wobei als Werkzeuge rotierende Scheiben mit Klingen, Rotorarme mit Zinken und dergleichen verwendet werden. Zwischen den Werkzeugen und dem Getriebe ist eine Überlastsicherung vorgesehen, die den Antrieb unterbricht, falls das Werkzeug auf ein Hindernis trifft und an seiner Drehbewegung gehindert wird.

So zeigt die US-A-4,497,161 einen Mähbalken mit einer Vielzahl nebeneinander angeordneter, um eine im wesentlichen vertikale Drehachse, rotierender Mähscheiben. Jede Mähscheibe ist auf einer aufrechten Welle grundsätzlich drehfest gelagert, die über ein Winkelgetriebe angetrieben wird. Die Befestigung einer jeden Mähscheibe auf der Welle erfolgt über Scherstifte oder -bolzen, die mittels einer Haube in Eingriff in einer Lage gehalten werden, in der sie miteinander fluchtende Löcher in der Mähscheibe und in einem Flansch der Welle durchdringen und dadurch die drehfeste Verbindung erzeugen. Trifft die Mähscheibe auf ein Hindernis, können die einzeln oder zusammenhängend ausgebildeten Scherstifte bei Erreichen einer bestimmten Last abscheren und die Antriebsverbindung trennen, so daß das Getriebe nicht beschädigt wird.

Sobald bei dieser Ausführung die Bolzen abgeschert sind, können die in der Nabe befindlichen Teile nach unten aus den Durchgangsbohrungen fallen und in das Futter gelangen. Darüber hinaus ist eine zentrische Lage der Mähscheibe nicht mehr gesichert, wenn die Scherstifte gebrochen sind.

Es ist zudem aus dem Prospekt "HAY PREPARATION Druckvermerk DKA120 Litho in U.S.A. (95-02) bekannt, eine Nabe vorzusehen, die mittels Schrauben an der Mähscheibe gehalten wird und eine Bohrung mit einer Innenverzahnung aufweist, die in eine Außenverzahnung auf einer senkrechten Welle eingreift. Die Innenverzahnung ist so ausgelegt, daß die Zähne abscheren, wenn ein Überlastzustand eintritt.

Diese Ausführung bewirkt, daß im Überlastfall die gesamte Nabe ausgetauscht werden muß.

Die US-A-4,999,981 offenbart schließlich einen gleichermaßen aufgebauten Mähbalken mit jeweils auf einer Antriebswelle befestigten Mähscheiben. Bei dieser Vorrichtung ist jede Antriebswelle mit einer Sollbruchstelle versehen, die im Überlastzustand zu einem Bruch der Antriebswelle und somit zu einer Unterbrechung des Antriebs führt.

Diese Vorrichtung ist insofern nachteilig, als die Mähscheibe nach dem Bruch der Antriebswelle eine unvorhersehbare Bewegung ausführen und evtl. weggeschleudert werden kann.

Das der Erfindung zugrunde liegende Problem wird darin gesehen, daß die bekannten Vorrichtungen entweder keine rasche und kostengünstige Instandsetzung ermöglichen und/oder das Werkzeug, z. B. eine Mähscheibe, auch nach dem Ansprechen der Überlastsicherung nicht mehr sicher gehalten wird.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise ist weder der Ersatz einer teueren und hochfesten Nabe noch der einer Welle erforderlich, wenn die Mitnehmer abgeschert wurden. Da sich die Mitnehmer nicht durch das herkömmlich aus Blech gebildete Werkzeug erstrecken, sondern mit der stabilen Welle oder der Nabe in Eingriff stehen, bleibt auch nach mehreren Überlastfällen die Stabilität des Werkzeugs gewahrt. Da sich die Nabe im oberen Bereich der Welle befindet, ist das Scherglied auch leicht zugänglich, so daß eine umgehende Instandsetzung erfolgt.

Eine ringförmige Ausbildung des Scherglieds bewirkt eine gleichmäßige Kräfteverteilung beim Lastangriff. Die Verwendung eines Scherglieds mit einer Innen- und einer Außenverzahnung, wobei vorzugsweise die Innenverzahnung die Mitnehmerfunktion ausübt, erlaubt die Verwendung der Außenverzahnung der Welle somit für einen weiteren Zweck neben der ansonsten möglichen Verbindung mit der Nabe, falls eine Überlastsicherung nicht oder nicht an dieser Stelle vorgesehen ist. Zudem ergibt sich aufgrund der Verwendung von Zahnflanken eine relativ große Anlagefläche, die Flächenlastspitzen verhindert. An der Außenverzahnung kann z. B. der Antrieb für die Welle eingeleitet werden.

In einer alternativen Ausführungsform könnten auch nach außen gerichtete Zähne des Scherglieds die Mitnehmerfunktion ausüben. Die Wahl nach innen oder nach außen gerichteter Zähne könnte sich nach dem maximal zu übertragenden Moment richten.

Durch eine Veränderung der Zahnlänge und somit der Größe der Scherfläche der Mitnehmer kann das gewünschte Abschermoment bestimmt werden.

Nach einer anderen Ausführungsform der Erfindung sind die Mitnehmer nicht als Zähne ausgebildet, sondern als Zapfen, Nocken oder dergleichen, die sich insbesondere axial erstrecken und in Ausnehmungen in der Nabe eingreifen, so daß die Scherebene radial zu der Drehachse der Welle verläuft. Auch hier wird mit einer ringförmigen Anordnung der Mitnehmer eine gleichmäßige Lastverteilung erreicht. Die Ausnehmungen können als Sackbohrungen ausgebildet sein und nehmen dann die abgescherten Teile der Scherglieder auf, so daß sie - im Falle eines Mähbalkens - nicht in das Mähgut gelangen.

Eine zylindrische Ausbildung der Mitnehmer sorgt für eine gleichförmige Krafteinleitung, wobei die korrespondierende Ausbildung der Ausnehmungen zu einer möglichst guten Anlage führt, die die bestmögliche Lastverteilung hervorruft.

Die Nabe kann auf der Welle mit dem Scherglied zugleich axial gesichert werden, wenn das Scherglied hutförmig ausgebildet ist und axial an dem Ende der Welle anliegt. Eine sichere Anordnung der Nabe und damit des Werkzeugs erfolgt dann dadurch, daß die Nabe zwischen dem Scherglied und z. B. einem die Welle haltenden Lager eingeklemmt wird.

Das Scherglied und gegebenenfalls mit ihm die Nabe und mit dieser wiederum das Werkzeug können axial auf der Welle festgelegt werden, wenn sich in dieser eine axial verlaufende Gewindebohrung zur Aufnahme einer Schraube befindet, mit der das Scherglied und vorzugsweise auch andere Elemente, insbesondere das Werkzeug selbst oder mit der Welle zu verbindende Antriebselemente, festgelegt werden können. Dadurch ist es möglich, nur durch das Lösen und Entfernen der Schraube das Scherglied auszutauschen, was kaum Zeit in Anspruch nimmt. Die Schraube muß dabei nicht direkt auf das Scherglied oder das Werkzeug wirken; eine Festlegung kann vielmehr auch über einen separaten Klemmteil erfolgen.

Das hutförmige Scherglied wird unverlierbar gehalten, wenn sich die Schraube durch eine in ihm vorgesehene Öffnung erstreckt.

Die Verwendung der Metallkeramik-Technik zur Herstellung der Mitnehmer hat mehrere Vorteile. So können derart hergestellte Mitnehmer relativ hart und weniger elastisch sein, wodurch sich das Schermoment besser definieren läßt. Weiterhin können die Mitnehmer zerrieben werden, wenn sie abgeschert sind, so daß an der Nabe und der Welle keine Schäden entstehen. Schließlich handelt es sich um ein einfaches Herstellungsverfahren.

In der Zeichnung sind mehrere nachfolgend näher beschriebene Ausführungsbeispiele der Erfindung dargestellt. Es zeigt:
- Fig. 1: einen Abschnitt eines Werkzeugträgers in Draufsicht,
- Fig. 2: einen Schnitt durch den Werkzeugträger entlang der Linie 2-2 in Figur 1 und in Blickrichtung der dazugehörigen Pfeile,
- Fig. 3: ein in dem Werkzeugträger verwendetes Scherglied in Draufsicht,
- Fig. 4: einen Schnitt durch den Werkzeugträger entlang der Linie 4-4 in Figur 1 und in Blickrichtung der dazugehörigen Pfeile mit einer leicht abweichenden Ausführungsform der Erfindung,
- Fig. 5: einen Vertikalschnitt durch ein in der Ausführungsform nach Figur 4 verwendetes Scherglied,
- Fig. 6: eine perspektivische Ansicht des Scherglieds nach den Figuren 4 und 5,
- Fig. 7: einen Vertikalschnitt durch eine zweite Ausführungsform eines Scherglieds,
- Fig. 8: eine Draufsicht auf ein Scherglied gemäß Figur 7 und
- Fig. 9: einen Längsschnitt durch das Scherglied nach den Figuren 7 und 8 entlang der Linie 9-9 in Figur 8 und in der Blickrichtung der dazugehörigen Pfeile.

Zu Beginn der Beschreibung wird darauf hingewiesen, daß benutzte Begriffe wie "rechts", "links", "vorwärts", "vorne", "rückwärts" und "hinten" in bezug auf einen Betrachter zu verstehen sind, der hinter einem Werkzeugträger steht und in dessen normale Vorwärtsbewegungsrichtung während des Einsatzes schaut.

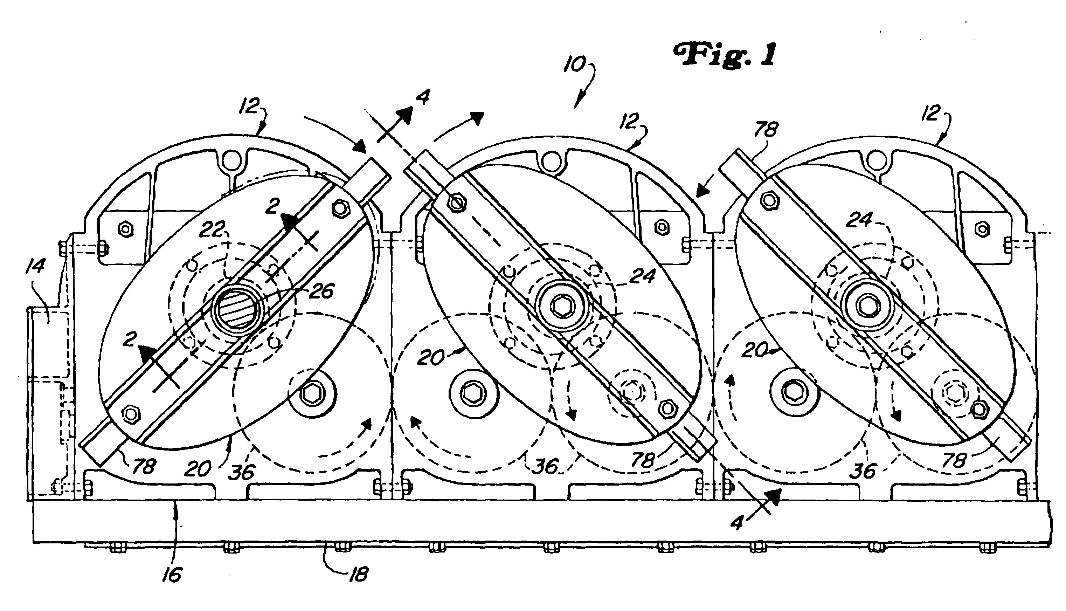

In Figur 1 ist ein linkes Endteil eines Werkzeugträgers 10 in der Art eines Mähbalkens eines Scheibenmähwerks gezeigt, der aus einer Vielzahl untereinander verbundener, hohler Moduleinheiten 12 besteht, die miteinander und mit rechten und linken Endkappen zusammenwirken, wobei nur die linke Endkappe 14 gezeigt ist, um ein flüssigkeitsdichtes Getriebegehäuse 16 zu bilden. Ein Versteifungsbalken 18 ist quer über den rückwärtigen Enden des Getriebegehäuses 16 befestigt.

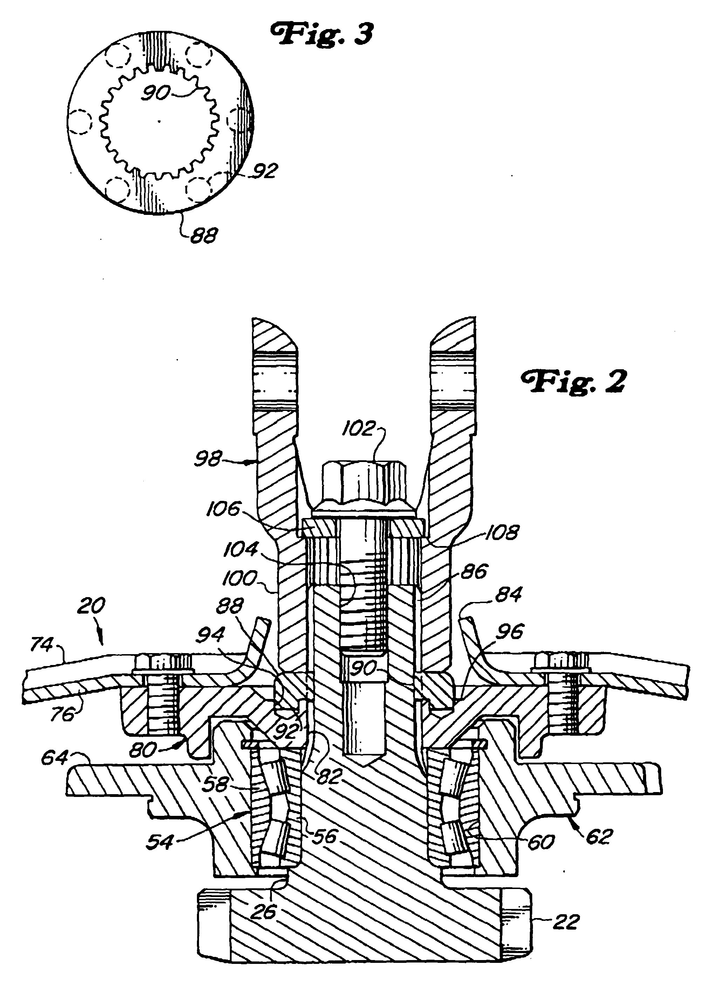

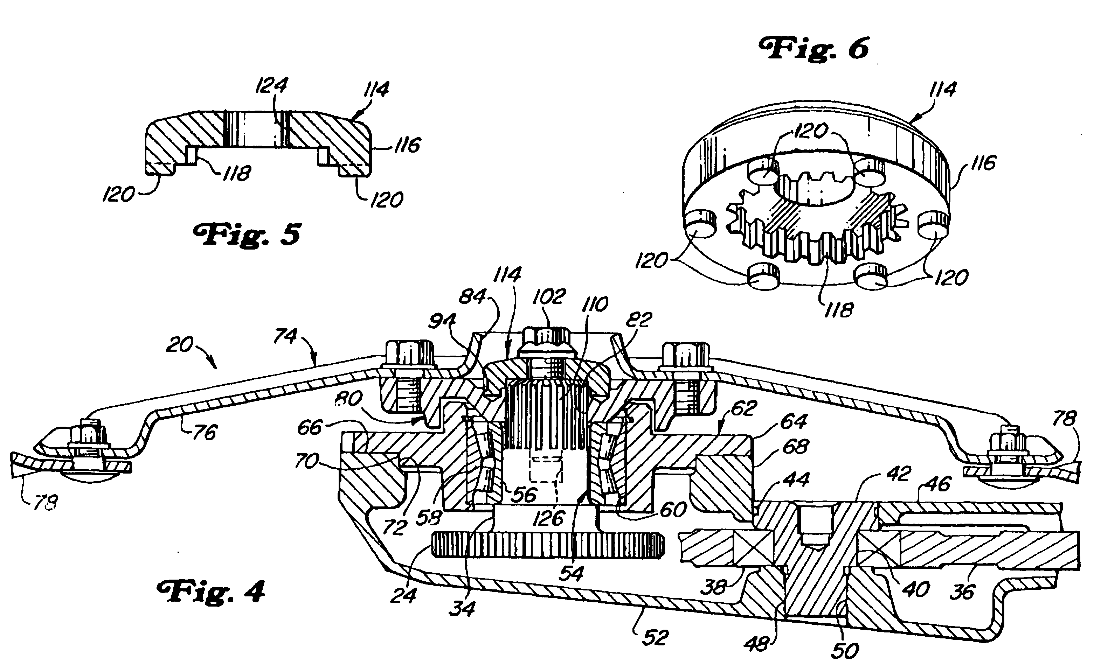

Werkzeuge 20 in der Form von Schneidtellern sind auf der Länge des Getriebegehäuses 16 montiert, wobei ein Werkzeug 20 jeweils in einer Moduleinheit 12 montiert ist. Die Werkzeuge 20 erfahren ihren Antrieb über ein Stirnradgetriebe, das eine Vielzahl von Antriebsrädern für die Werkzeuge 20 enthält, einschließlich eines ganz links gelegenen Eingangszahnrades 22, das sich innerhalb der ganz links gelegenen Moduleinheit 12 befindet und einschließlich identischer Zahnräder 24, die jeweils in den verbleibenden Moduleinheiten 12 enthalten sind. Der Antrieb für den Werkzeugträger 10 gelangt von einer nicht gezeigten Zapfwelle eines ebenfalls nicht gezeigten Ackerschleppers, z. B. zu einer Welle 26 für den Antriebseingang, die mit dem Eingangszahnrad 22 einstückig ausgebildet ist und sich von diesem nach oben erstreckt, wie dies am besten in Figur 2 zu sehen ist. Das Eingangszahnrad 22 ist zur Antriebsverteilung mit dem linken Werkzeug 20 und mit den Zahnrädern 24 in einer nachfolgend beschriebenen Weise verbunden. Es wird nun auch Bezug genommen auf Figur 4, aus der zu ersehen ist, daß der Antrieb für die verbleibenden Zahnräder 24 und somit für Wellen 34 für den Werkzeugantrieb, die mit den Zahnrädern 24 einstückig ausgebildet sind und sich von diesen nach oben erstrecken, über eine Vielzahl in Eingriff miteinander stehender Umkehrräder 36 erfolgt. Die Umkehrräder 36 erstrecken sich über eine rückwärtige Zone des Getriebegehäuses 16, wobei das ganz links gelegene Umkehrrad 36 mit dem Eingangszahnrad 22 kämmt. Jedes Umkehrrad 36 ist z. B. mittels eines Lagers 38 auf einer Welle 40 gelagert, die einen vergrößerten oberen Endbereich 42 besitzt, der dichtend und fest in einer Öffnung 44 in einer Decke 46 des Getriebegehäuses 16 eingesetzt ist, während ein unterer mit Gewinde versehener Endbereich 48 in eine Gewindebohrung 50 in einem Boden 52 des Getriebegehäuses 16 eingeschraubt ist.

Die Welle 26 und jede der Wellen 34 sind mittels Lager 54 zum Drehen um aufrechte Achsen in dem Getriebegehäuse 16 montiert, wobei Lager 54 jeweils einen auf die Welle 26 oder 34 aufgepreßten Innenring 56 und einen Außenring 58 besitzen, der in eine zylindrische Öffnung 60 eines Lagergehäuses 62 eingepreßt ist, durch die sich die Welle 26 oder 34 erstreckt. Das Lagergehäuse 62 besitzt einen ringförmigen Flansch 64, der an eine ringförmige Oberfläche 66 eines erhobenen zylindrischen Bereichs 68 der Decke 46 des Getriebegehäuses 16 angeschraubt ist. Jedes Lagergehäuse 62 besitzt einen zylindrischen Führungsbereich 70, der in einer Führungsöffnung 72 in dem zylindrischen Bereich 68 aufgenommen ist.

Jedes Werkzeug 20 enthält in diesem Ausführungsbeispiel eine Schneidscheibe 74 mit einem oval geformten Körper 76, der ein Paar Messer 78 oder Klingen an diametral gegenüberliegenden Stellen, die den größten Durchmesser zwischen sich aufweisen, jeweils schwenkbar aufnimmt. Eine Nabe 80 der Schneidscheibe 74 ist an eine mittige Stelle an der Unterseite des Körpers 76 angeschraubt und nach einem ersten Ausführungsbeispiel mit einer glatten mittigen Öffnung 82 versehen, die sich in axialer Flucht mit einem Loch 84 in dem Körper 76 befindet. Wie dies aus Figur 2 hervorgeht, wird ein oberer Endabschnitt der Welle 26 von einem gezahnten Bereich 86 gebildet, der sich aufwärts durch die mittige Öffnung 82 und das Loch 84 erstreckt. Eine Abschervorrichtung in der Art eines ringförmigen Scherglieds 88 ist vorgesehen, um eine Antriebsverbindung zwischen der Welle 26 und der Nabe 80 herzustellen. Insbesondere enthält das Scherglied 88 interne Zähne 90, die mit dem gezahnten Bereich 86 der Welle 26 an einer direkt oberhalb der Nabe 80 gelegenen Stelle in Eingriff stehen. Eine Vielzahl zerbrechlicher oder abscherbarer, zylindrischer und als Antriebszapfen ausgebildeter Mitnehmer 92 erstreckt sich in einer ringförmigen Anordnung von der Unterseite des Scherglieds 88 nach unten und wird in dazugehörigen entsprechenden zylindrischen Ausnehmungen 94 in einer ringförmigen Oberfläche 96 der Nabe 80 aufgenommen. Eine U-förmige Gelenkgabel 98 mit einem zylindrischen, rohrförmigen, unteren Innenzahnendbereich 100, der auf dem gezahnten Bereich 86 der Welle 26 aufgenommen ist und dessen unteres Ende mit dem Scherglied 88 in Verbindung steht, dient sowohl der Verbindung einer Antriebsquelle mit der Welle 26, wie auch als Klemmteil, der das Scherglied 88 in festem Eingriff mit der Nabe 80 und die Nabe 80 in fester Anlage an dem Innenring 56 des Lagers 54 hält. Eine als Klemmittel dienende Schraube 102 mit einem als Flansch ausgebildeten Schraubenkopf ist in eine Gewindebohrung 104 eingeschraubt, die sich axial in die Welle 26 erstreckt, wobei der Flanschkopf an einer Scheibe 106 anliegt, und mit der Scheibe 106 auf einer nach oben zeigenden Schulter 108 der Gelenkgabel 98 aufsitzt.

Es wird an dieser Stelle bemerkt, daß sich die Art der Verbindung der Wellen 34 mit einer zugeordneten Nabe 80 von der gerade beschriebenen Vorrichtung zur Verbindung der Welle 26 mit der dazugehörigen Nabe 80 geringfügig unterscheidet, weil insoweit keine Notwendigkeit besteht, die Wellen 34 über die jeweils dazugehörigen Schneibscheiben 74 hinausragen zu lassen. Infolgedessen werden im folgenden nur im Falle von Unterschieden andere Bezugszeichen vergeben.

Insbesondere mit Blick auf Figur 4 ist zu erkennen, daß die Welle 34 einen oberen Zahnungsendbereich 110 aufweist, der auf der gleichen Höhe wie die Oberseite der Nabe 80 endet, wobei die Nabe 80 eine glatte Öffnung 82 aufweist, die von der Welle 34 eingenommen wird. Anstelle eines ringförmigen Scherglieds 88 wird ein hutförmiges und zusätzlich als Klemmelement dienendes Scherglied 114 verwendet, um das Drehmoment von der Welle 34 auf die Nabe 80 zu übertragen. Mit Bezug auf die Figuren 5 und 6 ist zu erkennen, daß das Scherglied 114 einen ringförmigen unteren Abschnitt 116 enthält, der mit inneren Zähnen 118 versehen ist, die mit dem Zahnungsendbereich 110 der Welle 34 in Eingriff stehen. Eine Vielzahl sich nach unten erstreckender, zylindrischer zerbrechlicher oder abscherbarer Antriebszapfen oder Mitnehmer 120 befindet sich in kreisförmiger Anordnung an der Unterseite des Abschnitts 116 und ist in entsprechend ausgebildeten zylindrischen Ausnehmungen 94 in der Nabe 80 aufgenommen, wobei das Drehmoment von der Welle 34 über das Scherglied 114 auf die Nabe 80 übertragen wird. Eine andere Schraube 102, die sich durch eine Öffnung 124 in dem Scherglied 114 erstreckt und in eine Gewindebohrung 126, die axial in der Welle 34 verläuft, eingeschraubt ist, wirkt auf das Scherglied 114, um so die Mitnehmer 120 in den Ausnehmungen 94 und die Nabe 80 in Anlage an der Oberseite des Innenrings 56 des Lagers 54 zu halten.

Die Scherkraft der Mitnehmer 92 im Falle des Scherglieds 88 und der Mitnehmer 120 im Falle des Scherglieds 114 ist derart gewählt, daß sie bei einer vorbestimmten durch sie übertragenen Überlast abscheren, wie dies beispielsweise der Fall ist, wenn eine Schneidscheibe 74 in ein Hindernis eingreift. Es hat sich gezeigt, daß eine adäquate Scherfestigkeit in dem Scherglied 88 oder in jedem Scherglied 114 verwirklicht werden kann, indem die relativ kostengünstige Metallkeramiktechnologie angewandt wird.

Es wird angenommen, daß die jeweils der Welle 26 oder der Welle 34 zugeordneten Schrauben 102 jede Schneidscheibe 74 mit dem Rest des Werkzeugträgers 10 unversehrt hält, nachdem die Mitnehmer 92 oder 120 abgeschert sind. Desweiteren ist der Austausch zerstörter Scherglieder 88 oder 114 eine einfache Angelegenheit, die lediglich die Entfernung der entsprechenden Schraube 102 erfordert.

Es wird auch darauf hingewiesen, daß die Scherglieder 88 anstelle der Scherglieder 114 verwendet werden könnten, um das Drehmoment von der Welle 34 auf die Nabe 80 zu übertragen; allerdings müßte dann ein weiteres Klemmelement zwischen die Schraube 102 und das Scherglied 88 eingefügt werden.

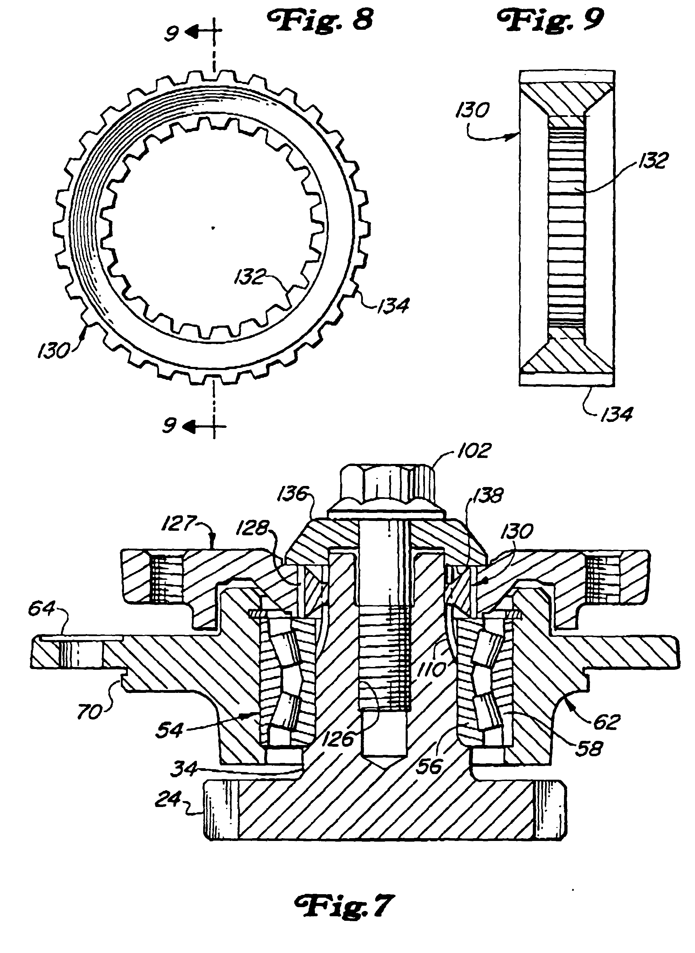

Im folgenden wird Bezug auf das in den Figuren 7 bis 9 Gezeigte genommen, in denen eine Abschervorrichtung nach einem zweiten Ausführungsbeispiel der Erfindung gezeigt ist. Diese Abschervorrichtung überträgt das Drehmoment von der Welle 26 oder 34 auf die betreffende Schneidscheibe 74, wobei die Zeichnung nur die Abschervorrichtung in Verbindung mit einer der Wellen 34 zeigt, da die Abschervorrichtung für die Welle 26 die gleiche wäre. Nur die Teile, die sich von den bisher beschriebenen unterscheiden, sind mit einem neuen Bezugszeichen versehen.

Im einzelnen ist zu bemerken, daß anstatt der Nabe 80 eine Nabe 127 verwendet wird, die eine mittige mit Innenverzahnung versehene Öffnung 128 aufweist, die konzentrisch und mit Abstand zu dem oberen Zahnungsendbereich 110 der Welle 34 angeordnet ist. Ein ringförmiges Scherglied 130 ist auf einem oberen Endabschnitt der Welle 34 aufgenommen und besitzt als Innenverzahnung ausgebildete Mitnehmer 132, die in Eingriff stehen mit dem gezahnten oberen Abschnitt der Welle 34, sowie eine Außenverzahnung 134, die in die entsprechende Verzahnung der Öffnung 128 der Nabe 127 eingreift. Ein hutförmiger Klemmteil 136 ist auf der Oberseite der Welle 34 vorgesehen und hat eine ringförmige Unterseite 138, die an der Nabe 127 und dem Scherglied 130 anliegt. Eine der Schrauben 102, die jeweils in eine Gewindebohrung 138 in der Welle 34 eingeschraubt ist, verläuft durch den Klemmteil 136 und wirkt durch diesen derart, daß er die Nabe 80, 127 und das Scherglied 130 in enger Anlage an dem Innenring 56 des Lagers 54 hält. Es wird bemerkt, daß die Mitnehmer 132, d. h. die Innenverzahnung, nur ungefähr ein Drittel der Länge der Außenverzahnung 134 einnehmen und so ausgebildet sind, daß sie abscheren, wenn eine Überlastung auftritt, wobei die Schraube 102 und der Klemmteil 136 derart zusammenwirken, daß sie die zugehörige Schneidscheibe 74 unversehrt mit dem Rest des Werkzeugträgers 10 halten, nachdem ein Schaden an dem Scherglied 130 aufgetreten ist. Der Austausch eines zerstörten Schergliedes 130 ist eine einfache Aufgabe, die nur die Entfernung der Schraube 102 und des Klemmteils 136 erfordert. Wie bereits bei den vorbeschriebenen Schergliedern 88 und 114 kann auch das Scherglied 130 aus Metallkeramik hergestellt werden.

Anstelle eines als Mähbalken ausgebildeten Werkzeugträgers 10 und anstatt von Schneidscheiben 74 kann auch eine Kreiselegge, ein Heuwender oder dergleichen angewendet werden, wobei dann die Werkzeuge 20 von umlaufenden Zinken oder dergleichen verkörpert werden.

## Patentansprüche

1. Werkzeugträger (10), insbesondere Mähbalken mit wenigstens einer Welle (26, 34), einem Werkzeug (20), einer das Werkzeug (20) tragenden Nabe (80, 127) und einem Scherglied (88, 114, 130), dadurch gekennzeichnet, daß das Scherglied (88, 114, 130) einerseits mit der Welle (26, 34) und andererseits mit der Nabe (80, 127) formschlüssig und lösbar in Eingriff steht und bei Überlast an dem Scherglied (88, 114, 130) vorgesehene und mit der Welle (26, 34) oder der Nabe (80) in Eingriff stehende Mitnehmer (92, 120, 132) abscheren.

2. Werkzeugträger nach Anspruch 1, dadurch gekennzeichnet, daß das Scherglied (130) ringförmig mit einer Öffnung ausgebildet ist, an deren Wandung als Innenverzahnung ausgebildete Mitnehmer (132) vorgesehen sind, die mit einem insbesondere außen angeordneten gezahnten Bereich (86) der Welle (26, 34) in Eingriff stehen.

3. Werkzeugträger nach Anspruch 2, dadurch gekennzeichnet, daß das Scherglied (130) mittels einer Außenverzahnung (134) mit der Nabe (80) in Eingriff steht, wobei die Mitnehmer (132) kürzer sind als die Zähne der Außenverzahnung (134).

4. Werkzeugträger nach Anspruch 1, dadurch gekennzeichnet, daß das Scherglied (88, 114) mit nach innen gerichteten Zähnen (118), die mit einem insbesondere außen angeordneten gezahnten Bereich (86) der Welle (26, 34) in Eingriff stehen, versehen ist und die Mitnehmer (92, 120) sich ringförmig in axial öffnende Ausnehmungen (94) in der Nabe (80) erstrecken.

5. Werkzeugträger nach Anspruch 4, dadurch gekennzeichnet, daß die Mitnehmer (92, 120) einen zylindrischen Querschnitt aufweisen und die Ausnehmungen (94) diesem Querschnitt entsprechend ausgebildet sind.

6. Werkzeugträger nach Anspruch 4 oder 5, dadurch gekennzeichnet, daß das Scherglied (114) hutförmig ausgebildet ist und axial an dein Ende der Welle (26, 34) anliegt.

7. Werkzeugträger nach einem oder mehreren der vorherigen Ansprüche, dadurch gekennzeichnet, daß die Welle (26, 34) mit einer zentrischen und axial verlaufenden Gewindebohrung (104) zur Aufnahme einer Schraube (102) versehen ist, die der axialen Festlegung des Scherglieds (88, 114, 130) dient.

8. Werkzeugträger nach Anspruch 7, dadurch gekennzeichnet, daß zwischen einem Kopf der Schraube (102) und dem Scherglied (88, 114, 130) ein Klemmteil (136) oder eine Gelenkgabel (98) zum Anschluß an eine Antriebswelle vorgesehen ist.

9. Werkzeugträger nach Anspruch 7, dadurch gekennzeichnet, daß die Schraube (102) das hutförmige Scherglied (114) durchsetzt.

10. Werkzeugträger nach einem oder mehreren der vorherigen Ansprüche, dadurch gekennzeichnet, daß die Mitnehmer (120, 132) aus Metallkeramik bestehen.

## Claims

1. A tool carrier (10), especially a mower beam, with at least one shaft (26, 34), a tool (20), a hub (80, 127) carrying the tool (20) and a shear member (88, 114, 130), characterized in that the shear member (88, 114, 130) is in interlocking, releasable engagement on one side with the shaft (26, 34) and on the other side with the hub (80, 127) and, on overload, entraining parts (92, 120, 132) provided on the shear member (88, 114, 130) and in engagement with the shaft (26, 34) or the hub (80) shear off.

2. A tool carrier according to claim 1, characterized in that the shear member (130) is of annular form with an opening, on the wall of which entraining parts (132) formed as internal toothing are provided, these being in engagement with a toothed region (86) of the shaft (26, 34), especially arranged on the outside.

3. A tool carrier according to claim 2, characterized in that the shear member (130) is in engagement with the hub (80) by means of external toothing (134), the entraining parts (132) being shorter than the teeth of the outer toothing (134).

4. A tool carrier according to claim 1, characterized in that the shear member (88, 114) is provided with inwardly directed teeth (118), which are in engagement with a toothed region (86) of the shaft (26, 34) arranged especially on the outside, and the entraining parts (92, 120) extend in a ring into axially opening recesses (94) in the hub (80).

5. A tool carrier according to claim 4, characterized in that the entraining parts (92, 120) have a cylindrical cross-section and the recesses (94) are formed in correspondence with this cross-section.

6. A tool carrier according to claim 4 or 5, characterized in that the shear member (114) is of cup form and bears axially against the end of the shaft (26, 34).

7. A tool carrier according to one or more of the preceding claims, characterized in that the shaft (26, 34) is provided with a central and axially extending threaded bore (104) for reception of a screw (102) which serves to fix the shear member (88, 114, 130) axially.

8. A tool carrier according to claim 7, characterized in that a clamping part (136) or a coupling fork (98) for attachment to a drive shaft is provided between a head of the screw (102) and the shear member (88, 114, 130).

9. A tool carrier according to claim 7, characterized in that the screw (102) passes through the cup-formed shear member (114).

10. A tool carrier according to one or more of the preceding claims, characterized in that the entraining parts (120, 132) consist of metal-ceramic.

## Revendications

1. Porte-outil (10) notamment barre de coupe comportant au moins un arbre (26,34), un outil (20), un moyeu (80,127) portant l'outil (20) et un organe de cisaillement (88,114,130), caractérisé en ce que l'organe de cisaillement (88,114,130) engrène, d'une part avec l'arbre (26,34) et d'autre part avec le moyeu (80,127) selon une liaison par formes complémentaires et de façon amovible et, dans le cas d'une surcharge, des organes d'entraînement (92,120,132) qui sont prévus sur l'organe de cisaillement (88,114,130) et engrènent avec l'arbre (26,34) ou avec le moyeu (80), se cisaillent lors d'une surcharge.

2. Porte-outil selon la revendication 1, caractérisé en ce que l'organe de cisaillement (130) est agencé avec une forme annulaire et comporte une ouverture, sur la paroi de laquelle sont prévus des organes d'entraînement (132) agencés sous la forme d'une denture intérieure et qui engrènent avec une zone dentée (86), disposée notamment sur le côté extérieur, de l'arbre (26,34).

3. Porte-outil selon la revendication 2, caractérisé en ce que l'organe de cisaillement (130) engrène avec le moyeu (80) au moyen d'une denture extérieure (134), les organes d'entraînement (132) étant plus courts que les dents de la denture extérieure (134).

4. Porte-outil selon la revendication 1, caractérisé en ce que l'organe de cisaillement (88,114) comporte des dents (118), qui sont dirigées vers l'intérieur et qui engrènent avec une partie dentée (86), disposée notamment à l'extérieur, de l'arbre (26,34), et les organes d'entraînement (92,110) s'étendent selon une disposition annulaire dans des évidements (94), ouverts axialement et formés dans le moyeu (80).

5. Porte-outil selon la revendication 4, caractérisé en ce que les organes d'entraînement (92,120) possèdent une section transversale cylindrique et les évidements (94) sont agencés avec une forme correspondant à cette coupe transversale.

6. Porte-outil selon la revendication 4 ou 5, caractérisé en ce que l'organe de cisaillement (114) est agencé en forme de chapeau et s'applique axialement contre l'extrémité de l'arbre (26,34).

7. Porte-outil selon l'une ou plusieurs des revendications précédentes, caractérisé en ce que l'arbre (26,34) est équipé d'un perçage taraudé central et axial (104) servant à loger un vis (102) qui sert à réaliser la fixation axiale de l'organe de cisaillement (88,114,130).

8. Porte-outil selon la revendication 7, caractérisé en ce qu'entre une tête de la vis (102) et l'organe de cisaillement (88,114,130) est prévue une partie de serrage (136) ou une fourche articulée (98) prévue pour le raccordement à un arbre d'entraînement.

9. Porte-outil selon la revendication 7, caractérisé en ce que la vis (102) traverse l'organe de cisaillement en forme de chapeau (114).

10. Porte-outil selon l'une ou plusieurs des revendications précédentes, caractérisé en ce que les organes d'entraînement (120,132) sont formés d'un cermet.
